# EUROPEAN PATENT APPLICATION

(11) **EP 2 052 970 A2**
(43) Date of publication of application: **29.04.2009**
(21) Application number: 07021752.6
(22) Date of filing: 09.11.2007
(51) Int. Cl.: B64D 33/02

(54) **Aero-acoustic aviation engine inlet for aggressive noise abatement**

(30) Priority: 22.10.2007 GB 0720640
(71) Applicant: TUAN, Yen, Kirkland WA 98033 (US)
(72) Inventor: TUAN, Yen, Kirkland WA 98033 (US)
(74) Representative: Brookes Batchellor LLP

(57) **Abstract**

An aero-acoustic aviation engine inlet is an air worthy jet engine inlet for commercial and business jet airplane applications.
On the inlet interior surface is the combination of an annular air blowing slot (4,5) followed immediately by annular acoustic lining segments (6,7,8). This slot-lining combination can be repeated multiple times in series along the inlet interior surface.
Air exiting from the blowing slot flows over the acoustic lining surfaces at higher speeds than that of the inlet mean flow, which enhance the noise attenuation performance of the acoustic linings above that of the acoustic linings alone.

## Description

### Background of the Invention

Jet airplanes are configured such that the propulsion systems, called nacelles, are attached to the airframe either on or near the wings or near the rear fuselage. Among the components of each nacelle is a turbo-fan engine. The front interface of the turbo-fan engine is in contact with an air intake system, called the inlet.

Conventional inlet consists of three segments of surfaces, namely, a contoured interior surface, an inlet lip surface, and a contoured exterior surface. The inlet lip surface and the exterior surface are considered as the integral parts of the front portion of the nacelle cowing.

In 1970 times, a flight hardware acoustic nacelle demonstration program was designed and tests carried out to evaluate what could be done about reducing the engine noise. In that program, noise absorption lining materials were installed on to the inlet interior surface and fan exhaust annular surfaces. It was found that fan exhaust noise could be managed.

However, it was found that the management of the inlet noise was not that evident by inlet peripheral linings (no inlet acoustic rings was desirable). The situation was aggravated by the restriction on the flight inlet length-simply put, not enough surfaces for the needed linings as oppose to that available in the fan exhaust duct.

In addition, buzz saw noise was generated in the fan inlet. Now, we have a new type of noise to deal with.

Identification of buzz saw noise signatures and the methods of their attenuation were pursued in the 1970's and are continuing up to the present. Buzz saw noise is a dominant inlet noise component at take-off engine speeds.

Boundary layer flow development on the inlet surface was known to be a flow concern. It was also found that boundary layer flow development in the inlet degrades the inlet acoustic lining noise reduction performance.

The struggle in dealing with inlet noise and its reduction is an on-going task up to the present.

Inlet boundary layer flow suction to remove the boundary layer logically would be able to restore inlet lining noise reduction performance to that at laboratory test condition. But from the point of view of inlet noise abatement as a whole, the effect of boundary layer flow suction is limited. The benefit vs. cost balance is also not in favor of the application of boundary layer flow suction.

It was then boldly surmised that perhaps an inlet boundary layer profile (an inverted flow profile) that can be created by tangential blowing flow over the acoustic lining surface might have additional noise attenuation benefit over that by applying boundary layer suction. Laboratory tests were designed and carried out. The test configurations included using tangential blowing as well as creating a thick boundary layer by a downstream facing step. The test results showed an unexpected large enhancement of lining attenuation over that without blowing (for buzz saw noise, say, doubling of the lining attenuation magnitudes, also audio recording directly indicated meritorious inlet noise abatement sensation by listening).
Thus, the concept of the aero-acoustic inlet began to emerge.

McAlpine, A., Fisher, M.J., "'Buzz-saw' Noise In Acoustically Lined Duct: Comparison of Measurement With Prediction", 8th AIAA/CESA Aero-acoustic Conference, Brichenrige, CO, USA, June 17-19,2002 Wilkinson, M.J., Joseph, P.E., "Active Control of Buzz-saw Tones Experimental Results From a Laboratory- Scale Rig", 11th AIAA/CEAS Aero-acoustic Conference, Monterey, Calif. USA, May 23-25, 2005

### Statement of Invention

This invention is concerned with a class of aero-acoustic aviation engine inlets for the commercial and business aircraft applications. A typical inlet consists of an exterior surface, an inlet lip, an interior surface and the unique features of multiple annular air blowing slots and multiple annular acoustic lining segments along the inlet interior surface. The blowing air flows, when activated, are to rub tangentially over the acoustic lining surfaces to enhance the inlet noise attenuation performance of the acoustic linings over that of the acoustic linings alone.

### Advantage

Aviation engine inlet noise control has been a technological challenge up to the present time. It has been the practice to apply acoustic ( sound absorbing ) linings along the inlet interior surface to attenuate inlet noise. The culprits for the limited noise attenuation success have been the constraint of limited inlet interior surface available for the acoustic linings and the adverse development of the boundary layer flow over the acoustic lining surfaces.

This invention introduces blowing air flows over the acoustic lining surfaces, which enhances aggressively the abatement of all the inlet noise components, namely the buzz saw noise, the broad band noise and the fan tone noise.

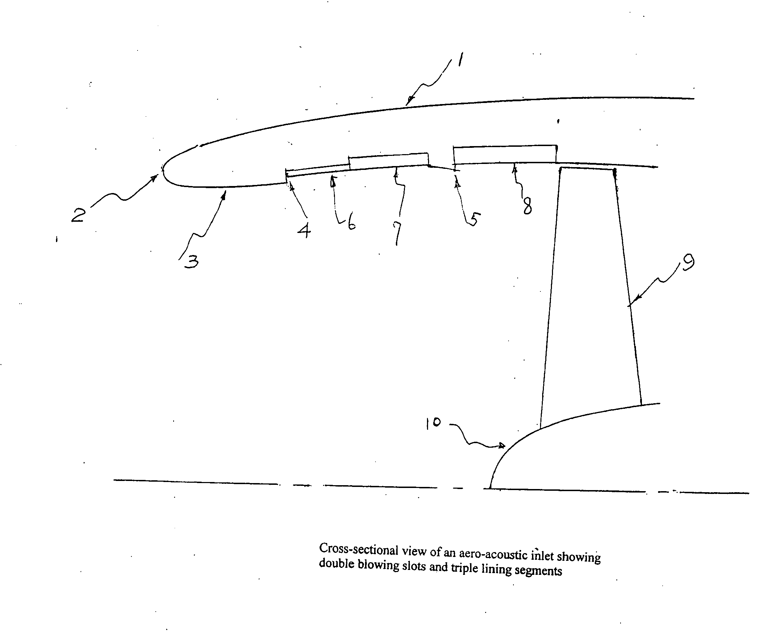

### Brief Description of the Drawing

There is one drawing.

In the drawing, is a representative aero-acoustic inlet. The aero-acoustic inlet is presented in a cross-sectional view with double blowing slots 4, 5 and triple acoustic lining segments 6, 7, 8. The front blowing slot, 4 is shown in the shape of a downstream facing step. It is annular, all the way around the circumference of the inlet interior surface 3. The air exit plane of the blowing slot is perpendicular to the inlet local interior surface. The acoustic lining segments 6, 7 follow immediately the blowing slot lip.

The second slot-lining combination, 5, 8 is configured the same way as that of the first slot-lining combination.

The inlet lip 2 and the inlet exterior surface 1 are the front components of the airplane propulsion system cowling.

Features in the drawing:
1 Inlet exterior surface
2 Inlet lip
3 Inlet interior surface
4 Blowing slot 1
5 Blowing slot 2
6 Acoustic lining segment 1
7 Acoustic lining segment 2
8 Acoustic lining segment 3
9 Fan blade
10 Inlet center body

### Detailed Description of the Invention

The aero-acoustic inlet invention deals with the inlet noise and its aggressive attenuation. A typical aero-acoustic inlet is shown in the figure.

On the interior surface 3 of the aero-acoustic inlet are the double blowing slots, 4,5 and the triple acoustic lining segments, 6,7,8 as shown in the drawing. The blowing air exiting from the blowing slot lips rub along the acoustic lining surfaces thus creating a new thin boundary layer there. The blowing flows in the neighborhood of the acoustic lining surfaces are at higher speeds than that of the inlet mean flow. These new flow fields near the acoustic lining surfaces increase the acoustic lining attenuation performance.

During take-off and climb out operations, the engine fan is operating at a near maximum speed to satisfy the thrust demands. A portion of the fan blades is operating at supersonic speeds. The fan rotor locked circumferentially uneven shock system generates buzz saw tones at multiple rotor rotational frequencies. To reduce these buzz saw tones, acoustic linings were applied to the inlet interior surface and the effectiveness was limited. Tangential blowing flow over the acoustic lining surface as described above had experimentally demonstrated a marked enhancement of the acoustic lining attenuation performance of the buss saw tones( doubling the attenuation magnitudes and widening the attenuation band width). This robust enhancement in buzz saw acoustic lining attenuation is captured in the aero-acoustic inlet.

Inlet broadband noise spans a wide frequency range for all engine speeds and is random. Fan tip clearance, tip vortices, and tip boundary layer flow are the culprits. "Cleaning -out" the fan tip flow by tangential blowing flow can lessen the broadband noise generation.
In addition, Tangential blowing over the acoustic lining surfaces had been demonstrated to enhance the acoustic lining broadband noise attenuation performance over that without blowing. The twin effects in reducing the inlet broadband noise are a unique feature of the aero-acoustic inlet.

During approach and landing operations, discrete tones at multiple fan blade passing frequencies are generated. Past practice has been using acoustic linings for the attenuation.
Tangential blowing over the acoustic lining surface both in removing the boundary layer and in creating an inverted flow profile therein enhances the acoustic lining attenuation performance.

### The aero-acoustic inlet parameters are:

Tangential blowing:
1 Blowing slot lip can be a downstream facing step or flush with interior surface contour. 2 Blowing flow speeds are higher than that of the inlet mean flow.
3 Blowing temperatures can be different from that of the inlet mean flow.
4 Blowing flow control can be in an on-off mode or any other adaptive modes.

Inlet acoustic linings:
1 There is one or multiple acoustic lining segments.
2 One segment of acoustic lining is optimized at some below blade passing frequency (BPF).
3 One segment of acoustic lining is optimized at some near blade passing frequency (BPF).
4 One segment of acoustic lining is optimized at some above blade passing frequency (BPF).
5 The positions of the acoustic lining segments follow immediately the positions of the blowing slots.

## Claims

1. An aero-acoustic aviation engine inlet for aggressive inlet noise abatement.

2. The said inlet according to claim 1 in which there exist an exterior surface, an inlet lip, an interior surface and one or multiple annular air blowing slots and one or multiple annular acoustic lining segments along the inlet interior surface.

3. The said annular air blowing slot and annular acoustic lining segments according to claim 2 are configured such that the position of the annular acoustic lining segments follow immediately the position of the annular air blowing slot, herein designated as a slot-lining combination.

4. The slot-lining combination according claim 3 may be repeated multiple times in series along the inlet interior surface.

5. The said annular air blowing slots according to claims 3,4 are to introduce blowing air flowing tangentially over the annular acoustic lining surfaces.

6. The said blowing air flows according to claim 5 are at speeds higher than the local inlet mean flow speed.

7. The blowing air flows according claims 5,6 are under an on-off control mode or any other adaptive control moods.

8. The acoustic lining segments according to claims 2,3,4 are designed to reduce various inlet noise components, namely the buss saw noise ,the broad band noise and the fan tone noise.

9. The blowing air flows over the acoustic lining surfaces according to all previous claims are to increase aggressively the inlet noise attenuation performance over the inlet noise attenuation performance of the acoustic linings alone.

10. With the availability of the blowing air flows according to the claims 5,6,7 the contours of inlet surfaces according to claims 1,2 can be fine tuned with respect to the inlet aerodynamic performance.
